# EUROPEAN PATENT APPLICATION

(11) **EP 2 860 069 A1**
(43) Date of publication of application: **15.04.2015**
(21) Application number: 13188028.8
(22) Date of filing: 10.10.2013
(51) Int. Cl.: B60R 16/08, B60C 23/16, B60G 11/30

(54) **Method for using a spare wheel as air tank**

(71) Applicant: IVECO MAGIRUS AG, 89079 Ulm (DE)
(72) Inventor: Spitz, Mario, 86381 Krumbach (DE); Schmidt, Jahn, 89077 ULM (DE); Geh, Daniel, 89073 ULM (DE)
(74) Representative: Franzolin, Luigi

(57) **Abstract**

Method for using a spare wheel (SW) as air tank comprising the step of connecting the spare wheel (SW) to a vehicular pneumatic circuit (PC) and comprising the preliminary step of removing a tire-valve (TV) of the spare wheel from a respective stem (VS), so as the entire inner section of the stem is available for the compressed air flowing.

## Description

### Field of the invention

The present invention relates to a method for using a spare wheel as air tank, in particular in the field of the vehicle provided with a pneumatic circuit, for example for supply pneumatic suspensions and/or pneumatic brakes.

### Description of the prior art

The compressed air is usually stored in metal or plastic air tanks which are positioned somewhere at the vehicles frame.

In the industrial vehicles, the air from braking system is not only used for brakes. Further it is used to power different functions at the vehicle and the trailer. So the air consumption is increasing in the last years.

Contrary to this, the space for conventional air tanks especially at tractors becomes more and more less because of many additional auxiliary's and exhaust gas treatment devices. Further the number of air tanks get fewer and fewer to save weight.

To have more pneumatic energy in the vehicles in most cases it is useful to increase the system pressure. But it is not possible to increasing the pressure endless, to store more pneumatic energy in the system. In addition higher pressure leads to other problems.

In order to improve the overall air storage capacity, it is possible to store the pneumatic air by using the volume of the spare wheel.

The spare wheel air tank is not able to replace the tanks which are necessary for the braking system because in case of a tire failure the driver need to disconnect the wheel from the pneumatic circuits, but this additional volume can be used to improve the comfort of the pneumatic system in normal use, namely when the spare wheel is not used as a wheel, but as a storage tank.

However, a spare wheel has been designed to be inflated and to maintain the compressed air inside, and not for supply said air.

The vehicle wheel are provided with a self-contained valve able to open only when the pressure outside the wheel exceeds the pressure inside the wheel.

Occasionally the tire-valve is open by means of specific pipes provided with a coaxial pin, able to press/open the tire-valve. This in order to put in communication the air chamber defined by the wheel and a manometer for measuring the pressure inside the wheel.

Therefore, the possibility to maintain always open the tire-valve is known, however, the low flow rate in and out of the tire-valve is a problem.

The valve itself defines a bottle-neck. In order to increase the flow rate it is possible to increase the pressures, so as to render faster the inflating and thus the deflating procedures, however, this leads to the same problems known in the vehicles with a reduced air storage capacity. In addition, the wheel have a high pressure limit, that cannot be exceeded.

### Summary of the invention

Therefore it is the main object of the present invention to provide a method which overcomes the above problems/drawbacks.

According to the present invention, before the pneumatic connection of a the spare wheel with the vehicular pneumatic circuit, the tire-valve is screwed out from its respective stem, so as the entire transversal section of the stem is available for the compressed air flowing.

The present proposed method implies that the connecting pipe between the pneumatic circuit and the spare wheel is not mandatorily provided with any kind of coaxial pins in order to maintain in open condition the tire-valve, due to the fact that when the pipe is engaged on the stem, the valve has been already removed from its hollow within the stem.

Therefore, advantageously, not only the present invention permits to improve the compressed air flow performances from/to the spare wheel, but also renders less complex the connection of the spare wheel with a pneumatic circuit.

These and further objects are achieved by means of the method and devices as described in the attached claims, which form an integral part of the present description.

### Brief description of the drawings

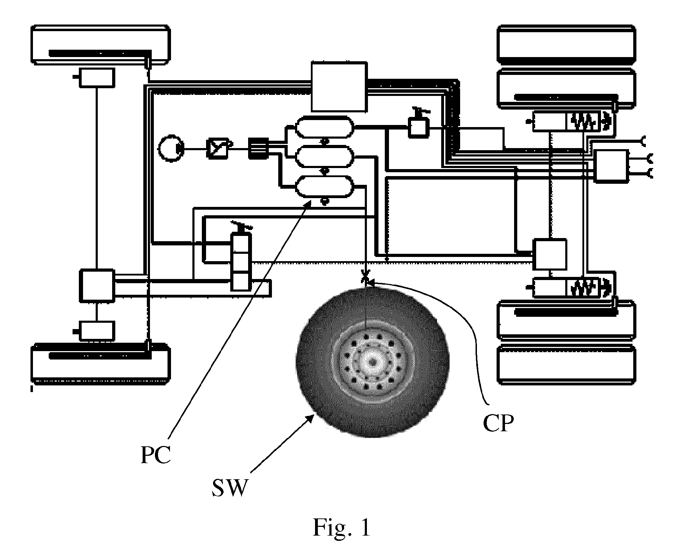

The invention will become fully clear from the following detailed description, given by way of a mere exemplifying and non limiting example, to be read with reference to the attached drawing figures, wherein Fig. 1 shows schematically the connection of a spare wheel to a vehicular pneumatic circuit and Fig. 2 shows a tire valve and its respective stem.

The same reference numerals and letters in the figures designate the same or functionally equivalent parts.

### Detailed description of the preferred embodiments

According to the present invention a spare wheel SW is used, as long as it is necessary to replace a damaged wheel, as compressed air storage tank.

Therefore, the spare wheel SW is connected to the pneumatic circuit PC of the vehicle through a connecting pipe CP. Before the connection of the connecting pipe CP the self-contained tire-valve TV is removed from its respective stem VS.

Usually, the set comprising the stem and the self-containing valve are called "tire-valve", however, we prefer to refer separately to the stem VS and to the valve TV suitably to be hollowed in the stem.

Usually, the valve is screwed within the stem and can be easily removed through a specific tool, well known to the skilled person in the art.

According to the present invention, it is not necessary to provide the connecting pipe CP of any kind of coaxial pin to open the tire-valve TV, the latter being already removed from its hollow within the stem before the pneumatic connection of the spare wheel to the vehicular pneumatic circuit. Therefore, the connecting pipe according to the present invention is lacking of any kind of means for opening a tire-valve.

According to a preferred implementation of the invention, said pneumatic circuit is for commanding pneumatic suspensions, including lift axles.

Using the spare wheel as additional air tank without the tire valve, gives the possibility to exploit in the best way the additional air capacity offered by the spare wheel.

In addition, the vehicular air storage capacity through the traditional storage tanks can be designed to fulfill the legal requirements. While, the spare wheel can improve the and the driveability of the vehicle.

When the spare wheel should be used as "simple wheel" for replacing a damaged one, it is necessary to disconnect the spare wheel SW from the vehicular pneumatic circuit PC and to reinstall the tire valve. Thus the spare wheel can be inflated at its regular pressure.

Further implementation details will not be described, as the man skilled in the art is able to carry out the invention starting from the teaching of the above description.

## Claims

1. Method for using a spare wheel (SW) as air tank comprising the step of connecting the spare wheel (SW) to a vehicular pneumatic circuit (PC) and comprising the preliminary step of removing a tire-valve (TV) of the spare wheel from a respective stem (VS), so as the entire inner section of the stem is available for the compressed air flowing.

2. Method according to claim 1, wherein said removing step comprises the unscrewing of the tire-valve.

3. Connecting pipe(CP) for pneumatically connecting a spare wheel (SW) to a vehicular pneumatic circuit (PC), the connecting pipe being lacking of any kind of means for opening a tire-valve (TV).

4. Pneumatic circuit of a vehicle adapted to be connected to a spare wheel (SW) in order to exploit its air storage capacity provided of a connecting pipe (CP) designed to be engaged on the spare wheel stem (VS) according to any of the previous claim 3.

5. Engine vehicle provided with a pneumatic (PC) circuit according to claim 4.
